# FASCICULE DE BREVET EUROPEEN

(11) **EP 1 843 124 B1**
(45) Date de publication et mention de la délivrance du brevet: **02.12.2009**
(21) Numéro de dépôt: 07105563.6
(22) Date de dépôt: 03.04.2007
(51) Int. Cl.: F42B 10/66, F02K 9/94, F02K 9/95

(54) **Structure générique d'initiation et de commande pour systèmes de contrôle de trajectoire comportant une couronne de générateurs de gaz**
Allgemeine Struktur zur Initiierung und Steuerung von Systemen zur Trajektorienlenkung, einen Leitring von Gasgeneratoren umfassend
Generic initiation and control structure for trajectory control systems comprising a crown of gas generators

(30) Priorité: 05.04.2006 FR 0602997
(43) Date de publication de la demande: 10.10.2007
(73) Titulaire: ROXEL France, 33160 Saint Medard en Jalles (FR); Centre National de la Recherche Scientifique, 75016 Paris (FR)
(72) Inventeur: ROSSI, Carole, 31120, GOYRANS (FR); ESTEVE, Daniel, 31520, RAMONVILLE SAINT AGNE (FR); SARAMAGO, Julia, 33320, EYSINES (FR); TROUILLOT, Pascal, 92400, COURBEVOIE (FR); GRELIER, Alain, 45510, TIGY (FR); ZANELLI, Didier, 45100, ORLEANS (FR)
(74) Mandataire: Lucas, Laurent Jacques

(56) Documents cités:
- EP-A2- 0 994 325
- FR-A1- 2 795 135
- US-A1- 2002 023 427
- US-A1- 2003 192 997
- US-B1- 6 378 292

## Description

### DOMAINE DE L'INVENTION

L'invention se rapporte au domaine des commandes de navigation d'engins volants, en particulier d'objets volants de type fusée:

### CONTEXTE DE L'INVENTION - ART ANTERIEUR

Lorsque l'on désire réaliser un engin volant ayant une grande manoeuvrabilité, il est généralement utile d'équiper celui-ci d'un système d'appoint permettant de suppléer les commandes principales, les gouvernes, en permettant d'infléchir de manière rapide la trajectoire de l'engin dans une direction donnée. Généralement pour des engins très véloces les gouvernes principales ne permettent pas de tels changements de trajectoire. On utilise donc plutôt des systèmes particuliers agissant par réaction, au moyen par exemple de générateurs de gaz disposés sur l'engin de façon appropriée. Un tel générateur expulse sur commande un jet de gaz dans la direction opposée à la direction vers laquelle on souhaite infléchir la course de l'engin et provoque par réaction l'inflexion de trajectoire voulue.

De tels systèmes connus de l'art antérieur sont constitués d'impulseurs pyrotechniques de type connu, disposés sur l'engin volant de façon à ce que la trajectoire de cet engin puisse être très rapidement infléchie dans n'importe quelle direction. Ces impulseurs sont par ailleurs commandés par l'organe central de gestion de l'engin qui détermine à tout instant la trajectoire que ce dernier doit suivre. Cet organe peut agir selon les cas sur les gouvernes principales ou bien, si cela s'avère nécessaire sur un ou plusieurs impulseurs du système d'appoint. Ces impulseurs sont généralement, de manière connue des impulseurs pyrotechniques dont la charge est mise à feu par une amorce qui est elle-même généralement une charge pyrotechnique faible, voire très faible. De la sorte, pour mettre en service un impulseur donné, le module de gestion commande la mise à feu de l'amorce au moyen d'un dispositif électrique par exemple. L'amorce étant une charge pyrotechnique de faible volume l'énergie électrique à fournir pour la mise à feu de l'amorce est généralement faible. L'utilisation d'un dispositif d'amorce permet donc avantageusement de maintenir l'énergie fournie par l'organe de gestion à un niveau faible, une commande de faible puissance permettant de mettre à feu l'impulseur considéré.

L'utilisation de systèmes de commandes de navigation comportant des impulseurs pyrotechniques présente l'avantage de rendre possible la commande de brusques changements de cap, changements de cap qui peuvent s'avérer nécessaires en particulier, par exemple, lorsqu'il s'agit de faire rallier un point précis à l'engin volant. En revanche ce sont généralement des dispositifs dont les éléments sont répartis dans l'ensemble de l'engin, les impulseurs et leurs amorces étant montés sur l'engin de manière appropriée, tandis que les moyens de commande de mise à feu sont logés au niveau de l'organe central qui gère la trajectoire de l'objet. Par suite la liaison entre les divers éléments nécessite la mise en place du câblage approprié qui peut, dans certains cas, s'avérer très encombrant au regard de la taille de l'engin. L'ensemble doit en outre être installé sur l'engin lors de sa construction et ne peut pas être démonté de manière simple, ce qui exclut en pratique la possibilité d'adapter de manière simple, rapide et amovible un système générique d'appoint permettant d'agir de manière rapide sur la trajectoire de l'engin.

La demande de brevet européen publiée 19/04/2000 sous la référence EP 0 994 325 A2 déposée par la société TRW Inc.- Redondo Beach - California (US) décrit un dispositif un système de propulsion micro-électromécanique à tuyère composé d'éléments assemblés formant un dispositif à la fois autonome et compacte dans lequel les différentes fonctions sont localisées sur différents éléments assemblés les uns aux autres. Un tel dispositif peut en particulier être monté de façon simple et rapide sur un engin tel que ceux décrits précédemment. En revanche sa réalisation par assemblage et connexion d'élément réalisant chacun une fonction propre, mécanique, électrique ou pyrotechnique, reste une opération relativement complexe et peu automatisable.

### PRESENTATION DE L'INVENTION

Un but de l'invention est de pallier les inconvénients précités en proposant un dispositif de commande de navigation à la fois autonome, compact, simple à réaliser, et facilement montable ou démontable, dont la structure est basée sur des impulseurs pyrotechniques. Un autre but de l'invention est de proposer une structure générique dont la puissance peut être adaptée à différents types d'engins.

A cet effet, l'invention a pour principal objet un Dispositif de contrôle et d'initiation pyrotechnique pour système générateur de gaz selon la revendication 1.

Le dispositif selon l'invention comporte une pluralité d'impulseurs pyrotechniques, le dispositif comportant un support, une pluralité de micro actionneurs pyrotechniques et un module de commande apte à activer les micro actionneurs comportant une pluralité de composants électroniques. Selon l'invention, le support est réalisé dans un matériau semi-conducteur, les micro actionneurs sont constitués par des cavités usinées dans le support et les composants électroniques du module de commande sont des circuits intégrés réalisés sur le support. Le support constitue une structure intégrée pyroWSI apte à contrôler et à initier la mise à feu des impulseurs.

Selon une variante de réalisation du dispositif, le support a la forme d'une galette circulaire et comporte une couronne périphérique sur laquelle les micro actionneurs sont implantés de manière régulière et une zone centrale sur laquelle sont réalisés les circuits électroniques intégrés constituant le module de commande.

L'invention a également pour objet un système de contrôle de trajectoire pour engin volant, comportant un dispositif selon l'invention et un bloc d'impulseurs pyrotechniques en forme de section de cylindre, à la périphérie duquel les impulseurs sont régulièrement disposés, le dispositif et le bloc d'impulseurs étant assemblés de façon à ce que chaque impulseur puisse être mis à feu par initiation d'un micro actionneur.

Selon une variante de réalisation du système de contrôle de trajectoire selon l'invention, le bloc d'impulseurs pyrotechniques forme une couronne périphérique entourant le dispositif de contrôle et d'initiation pyrotechnique, l'ensemble formant un système de relativement faible puissance.

Selon une autre variante de réalisation du système de contrôle de trajectoire selon l'invention, le bloc d'impulseurs pyrotechniques est de taille plus importante et forme un support sur lequel est monté le dispositif de contrôle et d'initiation pyrotechnique, l'ensemble formant un système pouvant fournir une puissance plus élevée.

Selon une autre variante de réalisation le système de contrôle de trajectoire selon l'invention comporte en outre un sous-ensemble additionnel comportant lui-même des moyens pour mettre en rotation le bloc d'impulseurs pyrotechniques et le dispositif de contrôle et d'initiation pyrotechnique. Le système permet alors une gestion intelligente des ressources constituées par les impulseurs encore disponibles à un instant donné.

Selon une variante de réalisation dépendante de la variante précédente, le sous-ensemble additionnel comporte également des moyens pour alimenter le dispositif de contrôle et d'initiation pyrotechnique en électricité.

Selon une variante de réalisation dépendante de cette même variante le sous-ensemble additionnel comporte également des moyens de communication pour recevoir des commandes d'un centre de commande déporté.

Selon l'invention, le module de commande du dispositif de contrôle et d'initiation pyrotechnique intègre l'ensemble des moyens aptes à déterminer l'attitude de l'engin, à gérer la mise à feu des impulseurs.
Selon une variante de réalisation, le module de commande du dispositif de contrôle et d'initiation pyrotechnique peut également intégrer des moyens aptes à commander la mise en rotation adéquate du bloc d'impulseurs pyrotechniques et du dispositif de contrôle et d'initiation pyrotechnique, et/ou à traiter les commandes transmises par un centre de commande déporté.

Selon une autre variante de réalisation, le module de commande du dispositif de contrôle et d'initiation pyrotechnique intègre des moyens aptes à réaliser un test d'intégrité du système.

### DESCRIPTION DES FIGURES

Les caractéristiques et avantages de l'invention seront mieux compris à la lecture de la description qui suit, description faite en regard des figures annexées qui représentent:
- les figures 1 et 2, des représentations schématiques de principe du sous-ensemble constituant l'élément central de l'invention,
- les figures 3 et 4, des représentations schématiques d'un premier exemple de réalisation de contrôle de trajectoire, de faible puissance, selon l'invention,
- Les figures 5 et 6, des représentations schématiques d'un autre exemple de réalisation d'un système de contrôle de trajectoire, de puissance plus levée,
- les figures 7 et 8, une représentation schématique d'un système de contrôle de trajectoire comportant en outre des moyens pour orienter selon les besoins les impulseurs pyrotechniques,
- la figure 9, la représentation schématique d'un engin volant de type missile, équipé d'un système de contrôle de trajectoire tel que celui illustré par les figures 7 et 8,
- la figure 10, un exemple de correction de trajectoire au moyen effectué par un système de contrôle de trajectoire tel que celui illustré par les figures 7 et 8,
- la figure 11, un synoptique fonctionnel de l'électronique intégrée sur le sous-ensemble constituant l'élément central de l'invention

### DESCRIPTION DETAILLEE

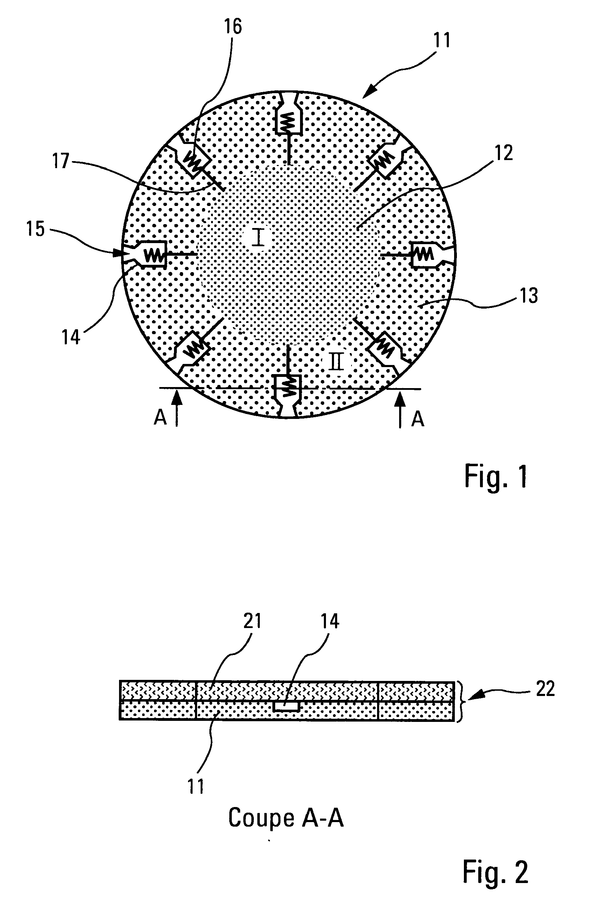

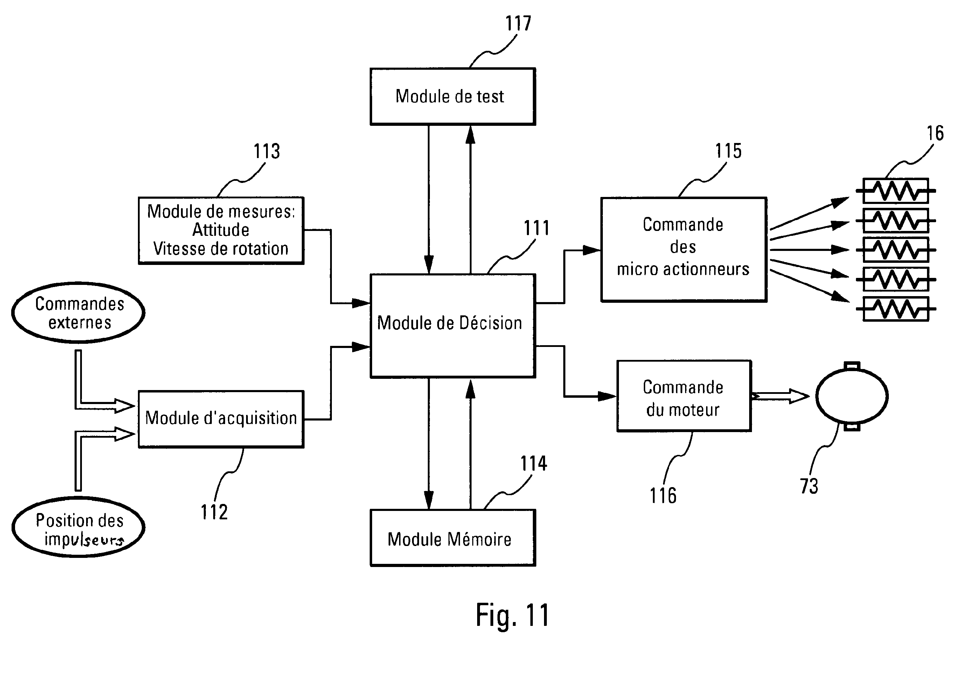

On s'intéresse dans un premier temps aux figures 1 et 2 qui permettent de définir la structure de base de l'élément central de l'invention.
Comme l'illustre la figure 1, l'invention est basée sur un élément central 11, intégré sur un substrat unique en matériau semi-conducteur, du silicium par exemple. Ce substrat se présente sous la forme d'un disque, ou d'une galette circulaire de semi-conducteur, de faible épaisseur, connu sous la dénomination anglo-saxonne de "wafer". Selon l'invention, ce substrat comporte deux zones fonctionnelles distinctes. On distingue ainsi une zone Centrale 1, 12, et une zone périphérique 11, 13. La zone centrale constitue la partie électroniquement active de l'élément.
Dans la zone centrale 12 sont réalisés l'ensemble des composants électroniques nécessaires au fonctionnement d'un système chargé de contrôler la trajectoire d'un engin volant de type missile. Ces composants électroniques sont réalisés sous forme de circuits intégrés sur le substrat semi-conducteur. La méthode de réalisation des composants électroniques sur cette partie centrale, qui est similaire à celle utilisée pour réaliser classiquement des circuits intégrés sur un wafer, n'est pas décrite ici. Par ailleurs, la décomposition fonctionnelle de cette partie centrale fait l'objet de la partie de la description qui suit, relative à la figure 11.
Dans la zone périphérique 13 sont réalisés, par usinage de la galette de silicium par exemple, des cavités 14 de petites dimensions (du cm au mm), présentant chacune un orifice débouchant 15 et constituant des micro actionneurs. Les cavités réalisées sont réparties, sur l'ensemble de la zone périphérique 13, de manière régulière de préférence. Ces cavités contiennent une petite quantité d'une substance pyrotechnique qui lorsqu'elle est activée brûle en produisant un jet de gaz à haute température. Selon l'invention, chaque micro actionneur est activé par une source de chaleur constituée, par exemple, par une résistance intégrée 16 placée à proximité des parois de la cavité. Lors de l'activation d'une résistance, la substance pyrotechnique est mise à feu et les gaz de combustion sont évacués par l'orifice débouchant 15.
La résistance, ou tout autre composant électronique intégré pouvant dissiper de la chaleur, est alimentée par un circuit de commande situé dans la zone centrale 12 au moyen de conducteurs 17 réalisés sur le substrat. D'un point de vue général le rôle des composants implémentés sur la zone centrale de l'élément 11, consiste donc principalement à activer les micro actionneurs pyrotechniques en alimentant en énergie électrique les résistances 16.

Selon l'invention, comme le montre la figure 2, le substrat 11 est associé à un autre élément 21, non représenté sur la figure 1, pour former la structure de base 22 selon l'invention. Ce deuxième élément 21 a pour rôle de réaliser la fermeture des cavités 14 de façon à ce que la substance pyrotechnique reste confinée dans ces cavités. Cet élément d'obturation 21, prend la forme d'une deuxième galette venant s'appliquer de manière étanche sur l'élément 11 contre la surface sur laquelle ont été pratiquées les cavités 14. On obtient ainsi un dispositif se présentant sous la forme de deux galettes juxtaposées 11 et 21, les orifices débouchant 15 se trouvant alors situés, comme le montre la figure 2, sur la tranche du dispositif.
Selon l'invention, l'élément d'obturation 21 est réalisé dans le même matériau que le substrat 11, ou tout au moins dans un matériau ayant des caractéristiques de dilatation très proches. On peut par exemple utiliser un substrat 11 en silicium et un élément d'obturation 21 en silicium (i.e. un deuxième wafer) ou encore en verre ou céramique. L'assemblage des deux éléments 11 et 21 peut par ailleurs être réalisé par tout moyen approprié connu, permettant de réaliser un assemblage hermétique ( Collage, soudure, assemblage par pression, etc...).

La structure de base 22 encore appelée structure pyroWSl ("pyrotechnical Wafer Scale Integration" selon la dénomination anglo-saxonne) ainsi réalisée constitue le coeur de l'invention. On dispose grâce à elle des moyens pour créer un étage élémentaire de propulsion complet, comportant des micro actionneurs répartis sur le pourtour de la structure et des circuits de commande et de contrôles, intégrés dans la zone centrale. Ces circuits permettent d'activer chacun des actionneurs. Cet étage élémentaire de propulsion peut en particulier être avantageusement utilisé seul, par exemple pour contrôler la trajectoire d'engins volants de petites tailles. Dans un tel cas d'emploi, les cavités 14, sont réalisées de façon à ce que l'orifice débouchant constitue l'orifice de sortie d'une micro tuyère, comme l'illustre la figure 1. Un tel dispositif peut par exemple être implanté dans une mini roquette, comme étage intermédiaire pour permettre d'infléchir la trajectoire de celle-ci dans n'importe quelle direction si cela s'avère nécessaire.

Cette structure de base 22 selon l'invention, présente également l'avantage de constituer un système de contrôle de trajectoire complet, quoique de faible puissance, qui peut avantageusement être associé à un ou plusieurs étages de propulsion constitués d'impulseurs pyrotechniques de plus ou moins forte puissance. Dans ce cas, la structure de base 22 constitue la partie intelligente du dispositif ainsi réalisé, ainsi que l'élément initiateur, chaque micro actionneur 14, jouant le rôle d'amorce pour un ou plusieurs impulseurs. La suite de la description présente trois exemples non limitatifs de dispositif de puissance ainsi réalisés, par assemblage de la structure générique élémentaire 22 à divers étages de puissance.

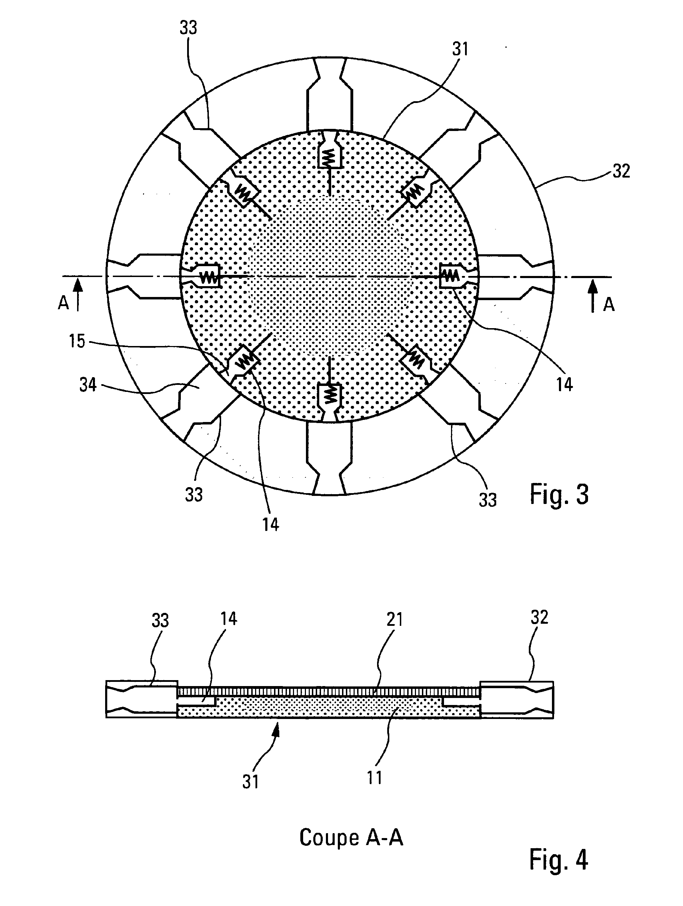

On s'intéresse à présent aux figures 3 et 4 qui présentent de manière schématique, à titre d'exemple d'application, un premier système de contrôle de trajectoire à générateurs de gaz comportant la structure de base associée à un étage d'impulseurs concentrique.

Comme l'illustre la figure 3, ce système comporte un premier étage central 31 constitué par une structure semblable à la structure 22 selon l'invention et un étage périphérique 32, en forme de couronne, comportant des impulseurs pyrotechniques 33.
Comme un micro actionneur, un impulseur pyrotechnique est un micro-moteur constitué d'un chargement pyrotechnique qui, après initiation, produit des gaz s'écoulant au travers d'une tuyère. La puissance qu'il peut délivrer peut cependant être bien supérieure à celle délivrée par un micro actionneur. Le nombre, la taille et la configuration des impulseurs sont adaptés à l'encombrement disponible, au besoin (en particulier, on pourrait envisager plusieurs couronnes extérieures permettant d'aboutir à des efforts plus importants).

Ces impulseurs 33 sont disposés tout autour de la couronne 32 de façon à ce que chaque impulseur 33 se trouve placé de manière adjacente vis à vis d'un micro actionneur 14. Le nombre et la configuration des micro actionneurs et des impulseurs sont adaptés à l'encombrement disponible, et au besoin. Les deux étages 31 et 32 sont assemblés l'un à l'autre de manière à ce que la jonction entre chaque impulseur et le micro actionneur associé soit hermétique et que les gaz produits par la mise à feu du micro actionneur pénètre sans fuite dans la chambre 34 de l'impulseur associé.
Dans l'exemple de la figure 3 les impulseurs 33 sont identiques et régulièrement répartis sur la couronne extérieure 32.

Comme le montre la figure 4, chaque impulseur 33 est constitué d'une cavité ou chambre 34, dont la paroi interne communique par l'intermédiaire d'une membrane obturante avec l'orifice débouchant d'un micro actionneur. Chaque micro actionneur joue ainsi le rôle d'amorce vis à vis d'un impulseur particulier, de sorte que la mise à feu de chaque impulseur peut être réalisée simplement en activant le micro actionneur correspondant au moyen des circuits électroniques de commande constituant la zone centrale de l'étage 31. L'activation d'un micro actionneur 14 se traduit par la mise à feu de l'impulseur 33 correspondant.
On constitue ainsi selon l'invention un système modulaire autonome, aussi simple à mettre en oeuvre que la structure de base 31 qui le constitue et pouvant appliquer des efforts substantiellement plus importants.

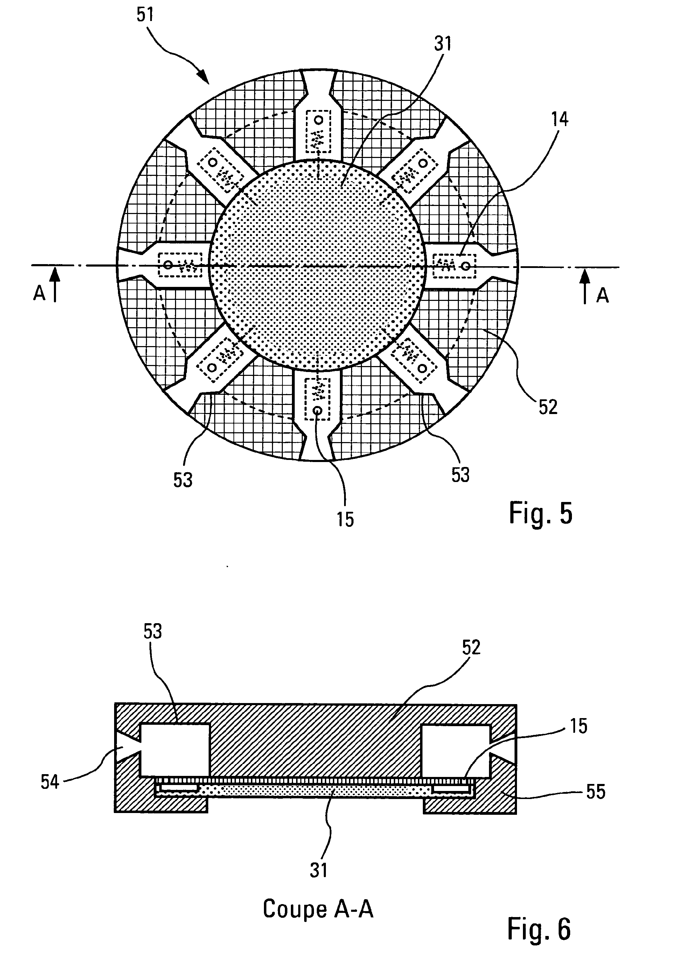

On s'intéresse à présent aux figures 5 et 6 qui présentent de manière schématique, un deuxième exemple d'application de la structure pyroWSI selon l'invention.
Ce deuxième exemple de système de contrôle de trajectoire 51 réalisé à partir de la structure pyroWSl selon l'invention, consiste en un assemblage de la structure pyroWSl 31 et d'un bloc 52 d'impulseurs, plus massif que dans l'exemple précédent, ayant la forme générale d'une section de cylindre. Les impulseurs 53 sont disposés ici dans le bloc de manière radiale et répartis régulièrement. Leurs orifices d'expulsion des gaz 54, en forme de tuyères, sont par ailleurs disposés sur la paroi latérale 55.
Comme on peut le constater sur la figure 6 la couronne 31 et le bloc 52 ne constituent plus ici, à la différence de l'exemple précédent, une structure concentrique dans laquelle l'impulseur est placé dans le prolongement du micro actionneur qui lui sert d'amorce, mais une structure juxtaposée. L'orifice d'évacuation 15 des gaz du micro actionneur n'est plus ici placé à la périphérie de la couronne 31 mais sur la face du micro actionneur en contact avec l'impulseur. Dans cette application, la couronne 31 se trouve ainsi montée à l'intérieur du bloc 42 pour former une seule structure cylindrique 41.
Ce deuxième mode de mise en oeuvre de l'invention permet avantageusement de former un système de contrôle de trajectoire comportant des impulseurs de plus grande taille et pouvant de ce fait appliquer à l'engin sur lequel il est monté des efforts nettement plus importants. Il présente également l'avantage de constituer une structure cylindrique compacte qui protège la couronne pyroWSl de semi-conducteur 31, par nature plus fragile que le bloc d'impulseurs 52 généralement métallique.
Le fonctionnement d'un tel système est par ailleurs identique à celui décrit précédemment; la mise à feu d'un impulseur 53 étant commandée par l'électronique intégrée sur la partie centrale de la couronne 31 par activation du micro actionneur correspondant.
Le bloc cylindrique compact constituant le système ainsi réalisé, peut en outre être intégré de manière simple à un engin volant de type fusée, missile ou roquette, en tant qu'étage intermédiaire.

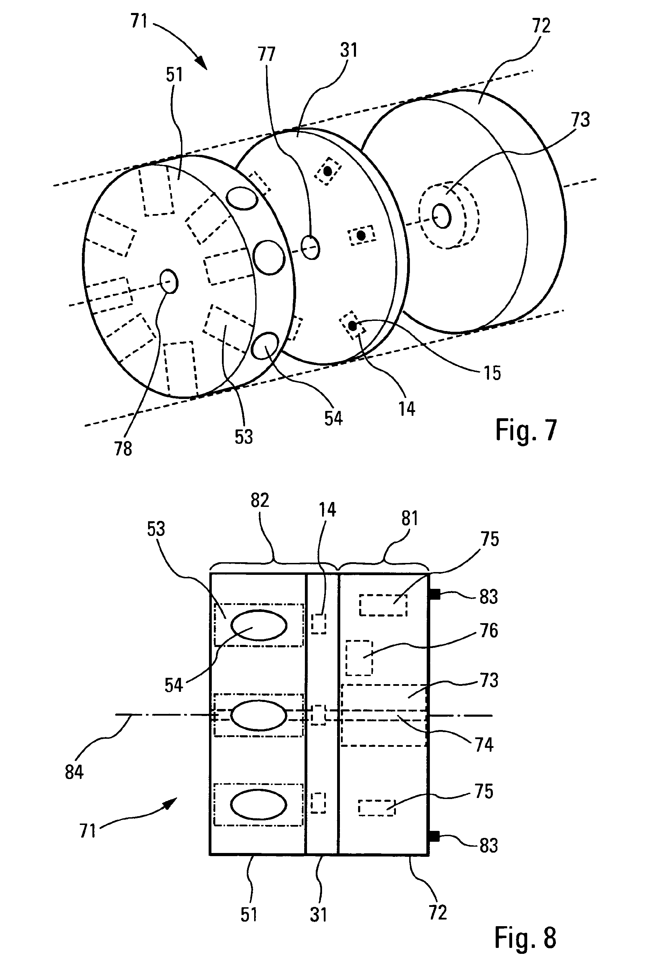

On considère à présent les figures 7 et 8 qui présentent un troisième mode de mise en oeuvre qui correspond à un mode préféré de réalisation. Comme l'illustre la vue éclatée de la figure 7, le système de contrôle de trajectoire 71 représenté ici comporte trois sous-ensembles assemblés pour former un bloc cylindrique unique. Le premier sous-ensemble est constitué d'une couronne pyroWSI 31 selon l'invention et le second sous-ensemble par un bloc d'impulseurs 51 de section cylindrique.
Le système de contrôle de trajectoire comporte en outre un troisième sous-ensemble 72 qui se présente sous la forme d'un boîtier cylindrique, renfermant différents éléments représentés schématiquement sur la figure 8. Les fonctions réalisées par le sous-ensemble 72 sont divers. Ce sous-ensemble intègre en particulier des moyens 75 permettant d'alimenter l'électronique intégrée à la couronne pyroWSl 31, des batteries par exemple, ainsi que le cas échéant des moyens de communication 76 (émetteur-récepteur), permettant par exemple à cette même électronique de recevoir des ordres transmis par un dispositif de guidage situé au sol. Le sous-ensemble 72 intègre également un moteur 73 et un axe d'entraînement 74 permettant d'entraîner en rotation les sous-ensembles 31 et 51 constituant le bloc propulseur proprement dit. A cet effet les sous-ensembles 31 et 51 sont munis d'ouvertures centrales 77 et 78, permettant le passage de l'axe 74. L'entraînement des sous-ensembles 31 et 51 en rotation peut par exemple être réalisé au moyen d'un axe d'entraînement cannelé venant s'engager dans des ouvertures 77 et 78 elles-mêmes cannelées. Selon l'invention la rotation est commandée par l'électronique intégrée sur la couronne 31. Le sous-ensemble 72 comporte par ailleurs des moyens, non représentés sur les figures, pour réaliser l'interface électrique avec la couronne 31 mobile en rotation.
Comme l'illustre la figure 8 le système de contrôle de trajectoire 71 comporte ainsi deux parties distinctes. Une première partie 81 montée de manière fixe, au moyen d'attaches 83 appropriées, sur l'engin dont on veut contrôler la trajectoire, et une partie 82 mobile en rotation autour d'un axe confondu avec l'axe de l'engin. Cette partie 82 est constituée par l'assemblage solidaire des sous-ensembles 31 et 51. L'assemblage est réalisé de telle sorte que les micro actionneurs 14 du sous-ensemble 31 constitué par la couronne pyroWSl selon l'invention, soient positionnés en regard des impulseurs 53 constituant le bloc 51.

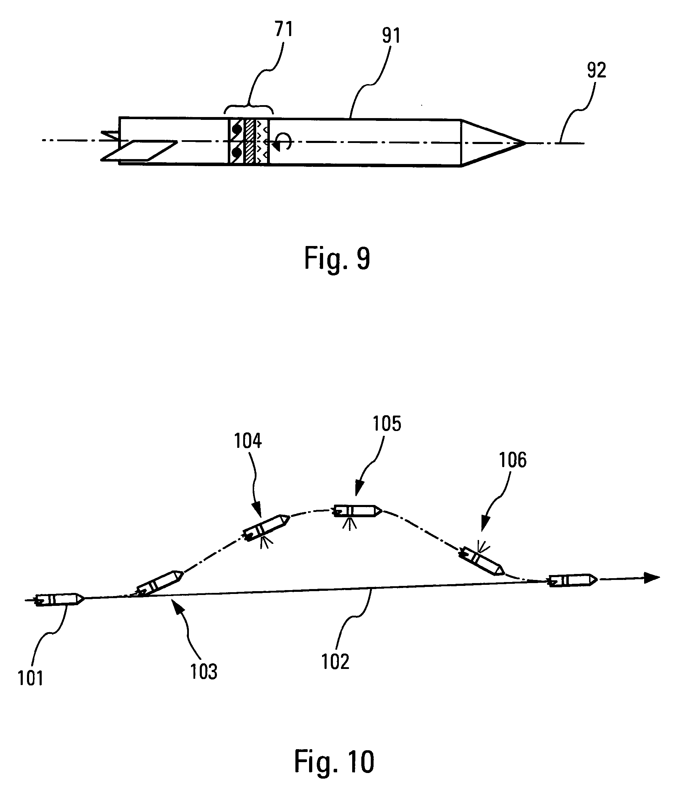

La figure 9 représente de manière schématique un engin volant 91, de type missile par exemple, sur lequel est monté le système de contrôle de trajectoire 71. Le système 71 constitue un étage intermédiaire de l'engin comportant un ensemble de propulseurs latéraux mobiles en rotation autour de l'axe de l'engin 92, les impulseurs pouvant être orientés dans toutes les directions autour de l'engin.

Le système présenté ici offre la possibilité de positionner le bloc d'impulseurs de façon à appliquer un effort dans une direction donnée au moyen de l'un ou l'autre des impulseurs, le choix de l'impulseur utilisé étant alors effectué par l'électronique intégrée à la couronne pyroWSI 31, qui envoie l'ordre de mise en rotation correspondant au moteur 73.
S'agissant d'un système à impulseurs pyrotechniques cette possibilité est particulièrement avantageuse. En effet l'action d'un impulseur donné ne peut s'exercer qu'une seule fois, la combustion de la charge pyrotechnique contenue dans un impulseur étant intégralement consommée lorsque l'impulseur est amorcé, ce qui met l'impulseur considéré hors service après usage. De la sorte pour une trajectoire donnée, si l'on veut appliquer de manière répétée à l'engin une action dirigée dans une direction donnée, il est nécessaire de pouvoir mettre successivement en oeuvre plusieurs impulseurs en orientant successivement chacun des impulseurs utilisés dans la bonne direction.
La figure 10 illustre de manière schématique l'utilisation de cette caractéristique avantageuse pour corriger la trajectoire d'un engin 101 dont la trajectoire initiale 102 est perturbée par une action extérieure 103, une forte rafale de vent par exemple. La trajectoire initiale est ici ralliée en procédant à la mise en oeuvre de trois impulseurs 104, 105 et 106, ces trois impulseurs ayant été orientés avant chaque action dans la direction appropriée.

La caractéristique avantageuse du système décrit ici permet également d'envisager des applications particulières dans lesquelles le système 71 comporte un bloc d'impulseurs 51 comportant lui-même des impulseurs de puissances différentes. De la sorte, le système de contrôle de trajectoire selon l'invention permet d'effectuer des corrections d'intensités variables dans toutes les directions.
Il est également possible de concevoir un système simplifié, adapté à de très petits engins et ne comportant pas de bloc d'impulseurs, les orifices d'expulsion des gaz des micro actionneurs du sous ensembles 31 étant alors adaptés pour que les micro actionneurs constituent des impulseurs de puissance très réduite. Dans ce cas la puissance et donc les dimensions du moteur 73 sont alors également adaptées.

Quel que soit le système envisagé, la caractéristique essentielle d'un système de contrôle de trajectoire selon l'invention réside dans la mise en oeuvre du sous-ensemble structurel générique 31, la couronne pyroWSI, réalisé sur un substrat unique en matériau semi-conducteur, du silicium par exemple. Selon l'invention le module de contrôle et de commande du système est réalisé par les composants électroniques intégrés sur la zone centrale de la galette de silicium ou Wafer constituant la couronne 31. Le synoptique de la figure 11 présente l'ensemble des fonctions intégrées sur cette couronne, dans le cas particulier, pris comme exemple non limitatif, du système de contrôle illustré par les figures 7 et 8.

Comme l'illustre ce synoptique les fonctions réalisées par l'organe de contrôle sont de plusieurs types. On distingue ainsi un module de décision 111, chargé de gérer l'ensemble du fonctionnement du système. Ce module est généralement un microprocesseur ou un microcontrôleur. Son rôle principal consiste à élaborer en fonction des informations dont il dispose les ordres permettant de mettre en service dans une direction donnée tel ou tel impulseur. A cet effet le module 111 reçoit des informations de différents modules, en particulier d'un module d'acquisition 112 et d'un module de mesure 113.
Le module d'acquisition 112 traite et transmet au module de décision 111 les informations et les ordres transmis par l'organe de contrôle à distance, généralement situé au sol. A ce titre il est relié aux moyens de communication 76 du sous-ensemble 71. Il effectue également l'acquisition de la position en rotation des sous-ensembles mobiles 31 et 51. Cette position est par exemple déterminée par le module fixe 71, relativement à un point de référence.
Le module de mesure 113 quant à lui regroupe l'ensemble des circuits permettant d'effectuer les mesures nécessaires pour établir si une correction de trajectoire est nécessaire, et les caractéristiques de direction et d'intensité de la correction à effectuer. A ce titre il procède en particulier à des mesures d'attitude, d'accélération, ou encore, dans le cas particulier où l'engin qui embarque le système est un engin dont la stabilité est assurée par sa rotation autour de lui-même, la vitesse de rotation de l'engin. Ces mesures sont ensuite transmises au module de décision 111.

L'organe de contrôle et de commande du système comporte en outre un module mémoire 114 dans lequel sont en particulier stockées toutes les informations relatives à l'état du système à l'instant considéré. On y trouve ainsi stockés l'état et, le cas échéant, la puissance des impulseurs non encore utilisés et pouvant donc encore être utilisés pour effectuer un changement de trajectoire.
L'organe de contrôle et de commande du système comporte également un module 115 de commande des micro actionneurs. Ce module sur réception de la commande correspondante de la part du module de décision 111, alimente le circuit électronique, une résistance par exemple, qui active le micro actionneur correspondant.
L'organe de contrôle et de commande du système comporte également un module 116 de commande du moteur 73 logé dans le sous-ensemble 71, qui met en rotation les sous-ensembles 31 et 51. Ce module permet au système de sélectionner un impulseur particulier et de positionner celui-ci de manière appropriée pour modifier la trajectoire de l'engin. La commande appliquée au moteur est selon le type de moteur utilisé, une commande analogique ou une commande numérique.
L'organe de contrôle et de commande du système comporte enfin un module 117 chargé de contrôler le bon fonctionnement des différents circuits, ainsi que l'intégrité générale du système. Les résultats des contrôles sont transmis pour exploitation au module 111 de décision.

Selon la complexité du système réalisé la structure de l'organe de contrôle et de commande telle qu'elle a été décrite dans les paragraphes qui précèdent peut évidemment subir quelques adaptations, la caractéristique essentielle de cet organe étant qu'il est totalement intégré sur la couronne pyroWSI qui constitue le sous-ensemble 31, sous-ensemble caractéristique commun à tous les modes de réalisation de systèmes de contrôle de trajectoire selon l'invention.

Comme on peut le constater dans la description qui précède la structure de base générique selon l'invention est techniquement très avantageuse. En effet, en intégrant sur un substrat semi-conducteur, à la fois des micro actionneurs ainsi que les composants électroniques nécessaires pour mettre en oeuvre ces micro actionneurs, elle permet de réaliser par simple assemblage de cette structure de base avec un bloc d'impulseurs convenablement choisi et défini un système de contrôle de trajectoire dont la puissance, l'encombrement, la forme et le poids sont adaptés, de manière optimale et peu coûteuse, à l'engin auquel il est destiné.

Il est également à noter que dans la description qui précède, cette structure de base générique est conçue avec une forme de galette circulaire adaptée aux applications décrites. Cette forme n'est, bien, entendu nullement une caractéristique limitative de l'invention. La forme de la structure peut varier en fonction de l'application. On peut par exemple envisager de commander avec cette structure générique un bloc propulseur comportant une pluralité d'impulses pyrotechniques disposés de manière rectiligne (le long d'un segment de droite). Dans un tel cas la forme de la structure sera adaptée de façon à ce qu'un micro actionneur puisse être placé en contact de chaque impulseur. On peut alors envisager que la structure générique de base prenne la forme d'une plaquette rectangulaire réalisée dans un morceau de substrat en matériau semi-conducteur.

## Revendications

1. Dispositif de contrôle et d'initiation pyrotechnique (22) pour système générateur de gaz comportant une pluralité de micro actionneurs pyrotechniques (14) et des moyens électroniques (12, 16, 17) de commande apte à activer les micro actionneurs (14), **caractérisé en ce qu'**il comporte un substrat (11) semi-conducteur unique en forme de galette circulaire, ou wafer, de structure pyrotechnical Wafer Scale Integration, intégrant deux zones fonctionnelles:
- une zone centrale (12) dans laquelle sont intégrés des composants électroniques de commande (112-117) ;
- une zone périphérique (13) dans laquelle sont réalisés les micro actionneurs, ces micro actionneurs étant constitués par des cavités directement réalisées dans le substrat ;
chaque micro actionneur étant associé à une source de chaleur (16) commandée électriquement par les moyens électroniques via un conducteur électrique (17) réalisé sur le substrat ; le dispositif étant complété par un élément obturateur (21) agencé sur le substrat (11) pour réaliser l'obturation des cavités (14) formées dans la zone périphérique (13) pour réaliser les micro actionneurs.

2. Dispositif selon la revendication 1, **caractérisé en ce que** l'élément d'obturation (21) est réalisé dans un matériau ayant des caractéristiques de dilatation sensiblement égales à celles du matériau constituant le substrat (11).

3. Dispositif selon la revendication 2, **caractérisé en ce que** l'élément d'obturation (21) est réalisé dans le même matériau semi-conducteur que le substrat (11).

4. Dispositif selon l'une des revendications 1 à 3, **caractérisé en ce que** les cavités (14) des micro actionneurs comporte un orifice situé sur la tranche du dispositif (15), l'élément d'obturation (21) ayant la forme d'une deuxième galette venant s'appliquer de manière étanche sur le substrat (11) contre la surface sur laquelle ont été pratiquées les cavités (14) de façon à refermer ces cavités.

5. Dispositif selon l'une des revendications 1 à 3, **caractérisé en ce que** l'élément d'obturation (21) a la forme d'une deuxième galette venant s'appliquer de manière étanche sur le substrat (11) contre la surface sur laquelle ont été pratiquées les cavités (14) de façon à refermer ces cavités, l'élément d'obturation présentant des orifices (15) agencés pour déboucher dans les cavités des micro actionneurs (14).

6. Système de contrôle de trajectoire pour engin volant, **caractérisé en ce qu'**il comporte un dispositif selon la revendication 4 et un bloc d'impulseurs pyrotechniques (32) formant une couronne périphérique entourant le dispositif de contrôle et d'initiation pyrotechnique (31) comportant des micro actionneurs (14) régulièrement disposés, le dispositif (31) et le bloc d'impulseurs (32) étant réalisés et agencés de telle sorte que chaque impulseur (33) puisse être mis à feu par initiation d'un micro actionneur (14).

7. Système de contrôle de trajectoire pour engin volant, **caractérisé en ce qu'**il comporte un dispositif selon la revendication 5 et un bloc d'impulseurs pyrotechniques (52) en forme de section de cylindre, à la périphérie duquel les impulseurs sont régulièrement disposés, le dispositif (31) et le bloc d'impulseurs (52) étant réalisés et agencés de telle sorte que chaque impulseur (53) puisse être mis à feu par initiation d'un micro actionneur (14).

8. Système de contrôle selon l'une quelconque des revendications6 ou 7, **caractérisé en ce qu'**il comporte en outre un sous-ensemble additionnel (72) comportant lui-même des moyens (73, 74) pour mettre en rotation le bloc d'impulseurs pyrotechniques (52) et le dispositif de contrôle et d'initiation pyrotechnique (31).

9. Système selon la revendication 8, **caractérisé en ce que** le sous-ensemble additionnel comporte également des moyens (75) pour alimenter le dispositif de contrôle et d'initiation pyrotechnique (31) en électricité.

10. Système selon la revendication 9, **caractérisé en ce que** le sous-ensemble additionnel comporte également des moyens de communication (76) pour recevoir des commandes d'un centre de commande déporté.

11. Système selon l'une quelconque des revendications 8 à 10, **caractérisé en ce que** le module de commande du dispositif de contrôle et d'initiation pyrotechnique intègre des moyens (111, 113, 114, 115, 16) aptes à déterminer l'attitude de l'engin et à gérer la mise à feu des impulseurs.

12. Système selon la revendication 11 **caractérisé en ce que** le module de commande du dispositif de contrôle et d'initiation pyrotechnique intègre des moyens (116) aptes à commander la mise en rotation adéquate du bloc d'impulseurs pyrotechniques et du dispositif de contrôle et d'initiation pyrotechnique, et/ou des moyens (112) aptes à traiter les commandes transmises par un centre de commande déporté.

13. Système selon la revendication 11, **caractérisé en ce que** le module de commande du dispositif de contrôle et d'initiation pyrotechnique intègre des moyens (117) de test d'intégrité du système.

## Claims

1. Pyrotechnic initiation/control device (22) for a gas generator system, comprising a plurality of pyrotechnic microactuators (14) and electronic control means (12, 16, 17) capable of activating the microactuators (14), **characterized in that** it comprises a single semiconductor substrate (11) in the form of a circular wafer of pyrotechnic Wafer-Scale Integration structure, incorporating two functional zones:
- a central zone (12) in which electronic control components (112-117) are integrated; and
- a peripheral zone (13) in which the microactuators are produced, these microactuators being formed by cavities directly produced in the substrate, each microactuator being associated with a heat source (16) electrically controlled by the electronic means via an electrical conductor (17) produced on the substrate, and the device being completed by a sealing element (21) placed on the substrate (11) so as to seal off the cavities (14) formed in the peripheral zone (13) for producing the microactuators.

2. Device according to Claim 1, **characterized in that** the sealing element (21) is made of a material having expansion characteristics substantially the same as those of the material constituting the substrate (11).

3. Device according to Claim 2, **characterized in that** the sealing element (21) is made of the same semiconductor material as the substrate (11).

4. Device according to any one of Claims 1 to 3, **characterized in that** each microactuator cavity (14) comprises an orifice (15) located on the edge of the device, the sealing element (21) having the form of a second wafer which is applied in a sealed manner on the substrate (11) against the surface on which the cavities (14) have been made, so as to close off these cavities.

5. Device according to one of Claims 1 to 3, **characterized in that** the sealing element (21) has the form of a second wafer which is applied in a sealed manner on the substrate (11) against the surface on which the cavities (14) have been made so as to close off these cavities, the sealing element having orifices (15) designed to open into the cavities of the microactuators (14).

6. Trajectory control system for a flying craft, **characterized in that** it comprises a device according to Claim 4 and a block of pyrotechnic thrusters (32) forming a peripheral ring surrounding the pyrotechnic initiation/control device (31) comprising uniformly positioned microactuators (14), the device (31) and the block of thrusters (32) being produced and arranged in such a way that each thruster (33) can be fired by initiating a microactuator (14).

7. Trajectory control system for a flying craft, **characterized in that** it comprises a device according to Claim 5 and a block of pyrotechnic thrusters (52) in the form of a section of a cylinder, on the periphery of which the thrusters are uniformly positioned, the device (31) and the block of thrusters (52) being produced and arranged in such a way that each thruster (53) can be fired by initiating a microactuator (14).

8. Control system according to either of Claims 6 and 7, **characterized in that** it further includes an additional subassembly (72) which itself comprises means (73, 74) for putting the block of pyrotechnic thrusters (52) into rotation and the pyrotechnic initiation/control device (31).

9. System according to Claim 8, **characterized in that** the additional subassembly also includes means (75) for supplying the pyrotechnic initiation/control device (31) with electricity.

10. System according to Claim 9, **characterized in that** the additional subassembly also includes communication means (76) for receiving commands from a remote control centre.

11. System according to any one of Claims 8 to 10, **characterized in that** the control module of the pyrotechnic initiation/control device incorporates means (111, 113, 114, 115, 116) which are able to determine the attitude of the craft and to control the firing of the thrusters.

12. System according to Claim 11, **characterized in that** the control module of the pyrotechnic initiation/control device incorporates means (116) which are able to make the block of pyrotechnic thrusters and the pyrotechnic initiation/control device undergo suitable rotation and/or means (112) which are able to process the commands transmitted by a remote control centre.

13. System according to Claim 11, **characterized in that** the control module of the pyrotechnic initiation/control device incorporates means (117) for testing the integrity of the system.

## Patentansprüche

1. Vorrichtung (22) zur Steuerung und pyrotechnischen Zündung für Gasgeneratorsystem, mit mehreren pyrotechnischen Mikrostellgliedern (14) und elektronischen Steuermitteln (12, 16, 17), die die Mikrostellglieder (14) betätigen können, **dadurch gekennzeichnet, dass** sie ein einziges Halbleitersubstrat (11) in Form einer kreisförmigen Scheibe oder eines Wafers mit "Pyrotechnical Wafer Scale Integration"-Struktur (pyroWSI-Struktur) enthält, die zwei funktionale Zonen integriert:
- eine Mittelzone (12), in die die elektronischen Steuerkomponenten (112-117) integriert sind;
eine Umfangszone (13), in der die Mikrostellglieder verwirklicht sind, wobei diese Mikrostellglieder durch direkt im Substrat ausgebildete Hohlräume gebildet sind;
wobei jedem Mikrostellglied eine Wärmequelle (16) zugeordnet ist, die durch die elektronischen Mittel über einen auf dem Substrat verwirklichten elektrischen Leiter (17) elektrisch gesteuert wird; wobei die Vorrichtung durch ein Verschlusselement (21) vervollständigt ist, das auf dem Substrat (11) angeordnet ist, um den Verschluss der in der Umfangszone (13) gebildeten Hohlräume (14) zu verwirklichen, um die Mikrostellglieder zu verwirklichen.

2. Vorrichtung nach Anspruch 1, **dadurch gekennzeichnet, dass** das Verschlusselement (21) in einem Material verwirklicht ist, das Dehnungseigenschaften besitzt, die im Wesentlichen gleich jenen des das Substrat (11) bildenden Materials sind.

3. Vorrichtung nach Anspruch 2, **dadurch gekennzeichnet, dass** das Verschlusselement (21) im selben Halbleitermaterial wie das Substrat (11) verwirklicht ist.

4. Vorrichtung nach einem der Ansprüche 1 bis 3, **dadurch gekennzeichnet, dass** die Hohlräume (14) der Mikrostellglieder jeweils eine Öffnung (15) aufweisen, die sich in der Schnittfläche der Vorrichtung befindet, wobei das Verschlusselement (21) die Form einer zweiten Scheibe hat, die auf dichte Weise auf dem Substrat (11) gegen die Oberfläche drückt, auf der die Hohlräume (14) ausgebildet worden sind, um diese Hohlräume zu verschließen.

5. Vorrichtung nach einem der Ansprüche 1 bis 3, **dadurch gekennzeichnet, dass** das Verschlusselement (21) die Form einer zweiten Scheibe hat, die auf dichte Weise auf dem Substrat (11) gegen die Oberfläche drückt, auf der die Hohlräume (14) ausgebildet worden sind, um diese Hohlräume zu verschließen, wobei das Verschlusselement Öffnungen (15) aufweist, die dazu ausgelegt sind, in die Hohlräume der Mikrostellglieder (14) zu münden.

6. Bahnsteuersystem für Flugkörper, **dadurch gekennzeichnet, dass** es eine Vorrichtung nach Anspruch 4 und einen Block (32) pyrotechnischer Triebwerke, die einen Umfangskranz bilden, der die Vorrichtung (31) zur Steuerung und pyrotechnischen Zündung, die regelmäßig angeordnete Mikrostellglieder (14) enthält, umgibt, wobei die Vorrichtung (31) und der Triebwerkblock (32) in der Weise verwirklicht und ausgelegt sind, dass jedes Triebwerk (33) durch Zünden eines Mikrostellglieds (14) gezündet werden kann.

7. Bahnsteuersystem für Flugkörper, **dadurch gekennzeichnet, dass** es eine Vorrichtung nach Anspruch 5 und einen Block (52) pyrotechnischer Triebwerke mit einer zylindrischen Querschnittsform, an deren Umfang die Triebwerke regelmäßig angeordnet sind, enthält, wobei die Vorrichtung (31) und der Triebwerkblock (52) in der Weise verwirklicht und ausgelegt sind, dass jedes Triebwerk (53) durch Zünden eines Mikrostellglieds (14) gezündet werden kann.

8. Steuersystem nach einem der Ansprüche 6 oder 7, **dadurch gekennzeichnet, dass** es außerdem eine zusätzliche Unteranordnung (72) enthält, die ihrerseits Mittel (73, 74) aufweist, um den Block (52) pyrotechnischer Triebwerke und die Vorrichtung (31) zur Steuerung und pyrotechnischen Zündung in Drehung zu versetzen.

9. System nach Anspruch 8, **dadurch gekennzeichnet, dass** die zusätzliche Unteranordnung außerdem Mittel (75) aufweist, um die Vorrichtung (31) zur Steuerung und pyrotechnischen Zündung mit Strom zu versorgen.

10. System nach Anspruch 9, **dadurch gekennzeichnet, dass** die zusätzliche Unteranordnung außerdem Kommunikationsmittel (76) enthält, um Befehle von einer ausgelagerten Steuerzentrale zu empfangen.

11. System nach einem der Ansprüche 8 bis 10, **dadurch gekennzeichnet, dass** das Steuermodul der Vorrichtung zur Steuerung und pyrotechnischen Zündung Mittel (111, 113, 114, 115, 116) enthält, die das verhalten des Flugkörpers bestimmen können und das Zünden der Triebwerke steuern können.

12. System nach Anspruch 11, **dadurch gekennzeichnet, dass** das Steuermodul der Vorrichtung zur Steuerung pyrotechnischen Zündung Mittel (116), die die geeignete Versetzung in Drehung des Blocks pyrotechnischer Triebwerke und der Vorrichtung zur Steuerung und pyrotechnischen Zündung steuern können, und/oder Mittel (112), die die von einer ausgelagerten Steuerzentrale übertragenen Befehle verarbeiten können, enthält.

13. System nach Anspruch 11, **dadurch gekennzeichnet, dass** das Steuermodul der Vorrichtung zur Steuerung und pyrotechnischen Zündung Mittel (117) zum Testen der Integrität des Systems enthält.
